# EUROPÄISCHE PATENTSCHRIFT

(11) **EP 3 443 273 B1**
(45) Veröffentlichungstag und Bekanntmachung des Hinweises auf die Patenterteilung: **06.05.2020**
(21) Anmeldenummer: 17701878.5
(22) Anmeldetag: 30.01.2017
(51) Int. Cl.: H02S 40/44, H02S 20/25, F24S 20/69, F24S 80/30

(54) **SOLARENERGIEDACHPFANNE MIT LÄNGENVERÄNDERLICHEM VERBINDUNGSELEMENT**
SOLAR ENERGY ROOF TILE HAVING A VARIABLE LENGTH CONNECTING ELEMENT
TUILE DE COLLECTE D'ÉNERGIE SOLAIRE MUNIE D'UN ÉLÉMENT DE RACCORDEMENT VARIABLE EN LONGUEUR

(30) Priorität: 15.04.2016 DE 102016107016
(43) Veröffentlichungstag der Anmeldung: 20.02.2019
(73) Patentinhaber: Rheinenergie AG, 50823 Köln (DE)
(72) Erfinder: HAKENBERG, Peter, 42719 Solingen (DE)
(74) Vertreter: Patentanwälte Bauer Vorberg Kayser
(86) Internationale Anmeldenummer: PCT/EP2017/051898
(87) Internationale Veröffentlichungsnummer: WO 2017/178125

(56) Entgegenhaltungen:
- EP-A2- 1 413 836
- WO-A1-2015/009366
- WO-A2-2012/140565
- DE-A1- 2 818 474
- DE-A1-102009 048 086
- US-A- 4 210 122
- US-A- 5 232 518
- US-A1- 2005 133 082
- US-A1- 2010 018 569
- US-A1- 2010 296 276
- US-A1- 2012 023 841
- US-B2- 8 122 879

## Beschreibung

Die vorliegende Erfindung betrifft eine Solarenergiedachpfanne zur Gewinnung elektrischer und thermischer Energie aus Sonnenenergie, wobei die Solarenergiedachpfanne im Wesentlichen die Form von herkömmlichen Dachpfannen aufweist.

Solarthermie, insbesondere die Bereitstellung von Warmwasser ist die am weitesten verbreitete Technik zur Nutzung der Sonnenstrahlung. Dabei werden Solarkollektoren zur Erwärmung von Flüssigkeit verwendet. Die Sonnenstrahlung trifft dabei auf eine Absorberfläche des Kollektors und erwärmt diese. Die gewonnene Wärme wird auf ein durchströmendes Medium, üblicherweise eine Flüssigkeit oder auch Luft, übertragen. Das von der Sonneneinstrahlung erwärmte Medium wird in der Regel mit einer Umwälzpumpe zu einem Warmwasserspeicher geleitet, wobei die gewonnene Wärme über einen Wärmetauscher von dem erwärmten Medium (z.B. einer Trägerflüssigkeit), an das Nutz- oder Trinkwasser im Warmwasserspeicher übertragen. Das Medium kühlt sich dabei ab und wird anschließend zurück zum Kollektor zurück geführt.

Wird eine Flüssigkeit als Medium verwendet, eignet sich insbesondere ein Frostschutz-Wasser-Gemisch. Alternativ kann Heizungswasser selbst in den Kollektor gepumpt und darin erwärmt werden. Auch in diesem Fall kann Trinkwasser über den Wärmetauscher erwärmt werden.

Auch Photovoltaik ist eine weit verbreitete Technik zur Nutzung der Sonnenstrahlung. Die Sonnenstrahlung trifft dabei auf ein Photovoltaikmodul mit Solarzellen. Diese wandeln die Energie des Sonnenlichts in elektrisch nutzbare Energie um. Die Umwandlung von Sonnenenergie in elektrisch nutzbare Energie ist hinlänglich bekannt und wird nicht näher erläutert.

Die Nutzung von Dachflächen ist für die Anbringung von Solarkollektoren gut geeignet. Handelsübliche Solarkollektoren werden dabei meist auf bereits fertiggestellte Dächer zusätzlich aufgebracht. Dabei müssen oftmals Befestigungselemente durch die Dachhaut auf die Dachtragekonstruktion montiert werden, wobei die Befestigung sturmfest und vorzugsweise auch korrosiongeschützt sein muss. Beim Durchstoßen der konventionellen Dachhaut werden zwangsläufig Abdichtungs- und anschließende Dichtigkeitsprobleme hervorgerufen. Hinzu kommt eine Erhöhung der Dachlast, was oftmals eine notwendige Verstärkung im Dachstuhl nach sich zieht. Hinzu kommt, dass derartige Sonnenkollektoren das optische Erscheinungsbild des Daches negativ beeinträchtigen.

Alternativ sind Solarethermie- oder Photovoltaikdachpfannen bekannt, die anstelle der üblicherweise verwendeten Dachpfannen, Dachziegel oder Dachsteine verwendet werden. Solarenergiedachpfannen beinhalten ebenfalls einen Absorber zur Aufnahme der Sonnenenergie und werden durch ein Medium, vorzugsweise eine Flüssigkeit durchströmt, das sich entsprechend erwärmt. Photovoltaikdachpfannen beinhalten oberseitig, also der Sonne zugewandt, Photovoltaikmodule bzw. Solarzellen zur Aufnahme und Umwandlung der Sonnenenergie. Die oben genannten Nachteile der aufgeständerten Sonnenkollektoren werden dadurch weitgehend vermieden, allerdings ist die Installation derartiger Solardachpfannen aufwendig und im Verhältnis zur herkömmlichen Dacheindeckung mit handelsüblichen Dachziegeln relativ schwierig. Ein wesentliches Problem besteht dabei insbesondere in dem hohen Montageaufwand für die Fluidverbindung einzelner Solarethermiedachpfannen. Das durchströmende Medium muss von einer Solarenergiedachpfanne zur nächsten geleitet werden, die Verbindung muss entsprechend dicht ausgeführt sein. Der Montage- und Zeitaufwand ist somit deutlich höher. Ähnliches gilt für die elektrische Verbindung von Photovoltaikdachpfannen, der Montage- und Zeitaufwand aufgrund der Verbindungsarbeiten deutlich höher als bei großflächigen Solarkollektoren.

Beschrieben sind derartige Dachpfannen zur Nutzung von Sonnenenergie und ihre Montage beispielsweise in der DE 28 18 474, der EP 1 413 836 A2, DE 10 2011 055 904 A1 und in der DE 20 2013 002 407 U1. Die Installation der darin beschriebenen Dachziegel ist aufwendig und schwierig, insbesondere weil zusätzlich Bauteile benötigt werden und Änderungen an der Tragekonstruktion notwendig sind.

Die Aufgabe der vorliegenden Erfindung besteht darin, eine Solarenergiedachpfanne bereitzustellen, deren Herstellung, Montage und Wartung möglichst einfach und kostengünstig ist. Wesentlich ist dabei, dass sich der Montagevorgang möglichst wenig von einer Dacheindeckung mit üblichen Dachziegeln unterscheidet. Das Gesamtsystem zur Energieumwandlung, welches die erfindungsgemäßen Solarenergiedachpfannen nutzt, soll dabei dauerhaft zuverlässig funktionieren.

Die Aufgabe wird durch eine Solarenergiedachpfanne mit den Merkmalen des Patentanspruchs 1 gelöst.

Eine erfindungsgemäße Solarenergiedachpfanne weist demnach einen mit einem Medium durchströmten, oberseitig angeordneten Absorber mit einer Zulaufleitung und einer Ablaufleitung auf, der auf einer Basispfanne angeordnet ist. Die Basispfanne dient der Befestigung der Solarenergiedachpfanne auf einem Dach. Weiterhin ist ein Photovoltaikmodul vorgesehen, das ebenfalls oberseitig, also der Sonne zugewandt angeordnet ist.

Die Form der erfindungsgemäßen Solarenergiedachpfanne entspricht im Wesentlichen der Form einer herkömmlichen Dachpfanne, so dass die äußere Erscheinung eines Daches bzw. eines Hauses durch Verwendung der Solarenergiedachpfanne kaum verändert wird. Der Begriff Dachpfanne ist dabei als Synonym für Dacheindeckungselemente wie Dachziegel, Dachsteine oder Dachschindeln zu verstehen und soll die Erfindung nicht auf Dachpfannen beschränken.

Der Absorber zur Gewinnung thermischer Energie weist eine Zulaufleitung und einer Ablaufleitung, das Photovoltaikmodul eine erste Stromleitung und eine zweite Stromleitung auf. Sowohl der Absorber als auch das Photovoltaikmodul sind über ihre Leitungen mit benachbarten Solarenergiedachpfannen verbindbar. Im Folgenden wird davon ausgegangen, dass eine Flüssigkeit als Medium für das Durchströmen des Absorbers dient, wobei aber auch ein gasförmiges Medium, beispielsweise Luft, denkbar ist.

Die Zulaufleitung weist an ihrem freien Ende ein erstes Verbindungselement und die Ablaufleitung an ihrem freien Ende ein zweites Verbindungselement auf, die medienleitet miteinander verbindbar sind. Wesentlich ist, dass eine der Zulauf- oder Ablaufleitungen längenveränderlich ausgeführt ist. Dadurch können in einem ersten Grundzustand beide Verbindungselemente innerhalb äußerer Abmessungen der Solarenergiedachpfanne angeordnet sein, im Montagezustand kann das Verbindungselement aufgrund der längenveränderlichen Leitung herausgezogen werden, so dass es über die äußeren Abmessungen der Solarenergiedachpfanne übersteht. Der Begriff äußere Abmessungen oder Außenabmessungen bezieht sich dabei auf die Außenabmessungen der Solarenergiedachpfanne in flächiger bzw. horizontaler Erstreckung, die bei einer üblichen rechteckigen Solarenergiedachpfanne durch die beiden Längsseiten und die beiden Querseiten bestimmt sind. Die Begriffe horizontal und vertikal beziehen sich dabei auf eine auf einer horizontalen Ebene aufliegenden Solarenergiedachpfanne, so dass deren Haupterstreckung somit in horizontaler Ebene verläuft.

Dies bedeutet, dass die erfindungsgemäße Solarenergiedachpfanne in ihrem Grundzustand die gleichen Abmessungen aufweist, wie eine handelsübliche Dachpfanne ohne Solarthermienutzung. Im Montagezustand kann aber das zweite Verbindungselement über die äußeren Abmessungen der Solarenergiedachpfanne herausgezogen und mit einem ersten Verbindungselement einer benachbarten Solarenergiedachpfanne verbunden werden. Anschließend können die beiden verbundenen Solarenergiedachpfannen aufeinander zubewegt werden, wobei sich die Ablaufleitung wieder verkürzt, bis die beiden Solarenergiedachpfannen bereichsweise derart übereinander angeordnet sind, dass die beiden Verbindungselemente unterhalb der oben liegenden Solarenergiedachpfanne also nicht mehr sichtbar, angeordnet sind.

Grundsätzlich können erfindungsgemäß die Zulaufleitung oder die Ablaufleitung oder auch beide Leitungen längenveränderlich ausgeführt sein, in einer besonders vorteilhaften Ausführungsvariante ist erfindungsgemäß die Ablaufleitung längenveränderlich ausgeführt. Im Folgenden wird die Erfindung deshalb für diese Ausführungsvariante erläutert, die jedoch nur eine der verschiedenen Möglichkeiten darstellt.

Das mit der Ablaufleitung verbundene zweite Verbindungselement ist vorzugsweise in einer in Ausschubrichtung verlaufenden Längsnut in der Basispfanne geführt. Die Zulaufleitung und das erste Verbindungselement sind dagegen ortsfest innerhalb der äußeren Abmessungen der Solarenergiedachpfanne angeordnet.

Die längenveränderbare Zulaufleitung erleichtert die Montage auf dem Dach deutlich, da Abstandsabweichungen zwischen benachbarten Solarenergiedachpfannen während der Eindeckung schnell und einfach ausgeglichen werden können. Die unterschiedliche Überdeckung der Pfannen ergibt sich auf Grund unterschiedlicher Lattenabstände, die wiederum wegen der ganzzahligen Anzahl an Dachpfannen entstehen, wenn unterschiedliche Dachlängen (von der Traufbohle zur First) realisiert werden müssen.

Der Begriff längenveränderliche Zulaufleitung ist derart zu verstehen, dass sich diese in Bezug auf die Ausschubrichtung des zweiten Verbindungselements in ihrer Länge ändert. In einer besonders bevorzugten Ausführungsvariante kann die Ablaufleitung aus diesem Grund als sogenanntes Trompetenrohr ausgeführt sein, bei dem sich zwei gegeneinander abgedichtete Rohrabschnitte unterschiedlichen Durchmessers ineinander verschieben können. Alternativ ist aber auch eine Ablaufleitung verwendbar, deren absolute Länge zwar gleich bleibt, aufgrund der Veränderung der geometrischen Anordnung jedoch eine Längenzunahme in Ausschubrichtung ermöglicht. Dies ist beispielsweise bei einer spiralförmig aufgedrehten elastischen Ablaufleitung der Fall, die erfindungsgemäß ebenfalls verwendet werden kann. Letztendlich ist die erfindungsgemäße Funktion entscheidend, nämlich dass die Ablaufleitung ein Herausziehen des zweiten Verbindungselements ermöglicht.

In einer besonders vorteilhaften Ausführungsvariante sind die beiden Verbindungselemente als Rast- bzw. Einrastverbindung ausgeführt. Beispielsweise kann das erste Verbindungselement eine Aufnahmeöffnung aufweisen, in die das zweite Verbindungselement einführbar und lösbar formschlüssig gehalten ist. Der Formschluss kann dabei durch einen Hinterschnitt in der Aufnahmeöffnung bewirkt werden, an dem eine Haltekante des zweiten Verbindungselements zur Anlage kommt.

Um eine sichere, aber dennoch lösbare Verbindung zu bewirken, können elastische Rastmittel vorgesehen sein, die in entsprechende Haltebereiche eingreifen. In einer besonders einfachen Ausführungsvariante kann das zweite Verbindungselement Öffnungen oder Vertiefungen aufweisen, in die elastische und/oder federbelastete Stifte des ersten Verbindungselements einrasten. Beim Verbindungsvorgang werden die Stifte durch das zweite Verbindungselement zunächst verdrängt, bis sie sich zurück in die entsprechenden Vertiefungen oder Öffnungen bewegen können.

Die beiden Verbindungselemente sind im eingerasteten Zustand fest miteinander verbunden, wobei die Verbindung insbesondere durch mindestens einen, vorzugsweise zwei federbelastete Stifte bewirkt wird. Die Einrastöffnung und das freie Ende des Stifts sind dabei so bemessen, dass der Stift nur bereichsweise und nicht vollständig in die Öffnung eingeführt wird. Hierzu kann der Stift an seinem freien Ende beispielsweise konisch geformt sein. Dadurch wird erreicht, dass die Verbindung in vertikaler Richtung, also quer zur Einführrichtung des Stifts gesperrt ist, andererseits die in Längsrichtung des Stifts wirkende Federkraft die beiden Verbindungselemente gegeneinander drückt, was eine dichte Verbindung gewährleistet. Selbstverständlich sind auch andere Rastverbindungen nutzbar, die eine ausreichend zuverlässige Verbindung der beiden Verbindungselemente bewirken. Wesentlich ist dabei, dass die Verbindung für die durchströmende Flüssigkeit dicht ist.

Vorteilhafterweise kann die Verbindung (mit Hilfe eines entsprechend ausgeformten Werkzeugs) dadurch wieder gelöst werden, dass die Stifte entgegen der Federkraft zurückgedrückt und das zweite Verbindungselement aus dem ersten Verbindungselement herausgezogen wird. Hierzu kann beispielsweise ein geeignetes Werkzeug verwendet werden, welches den Stift und die Einrastöffnung außer Eingriff bringt.

Eine alternative Lösung der Verbindung kann ein Drehschieber (drehbare Scheibe mit Aussparungen) sein, der im zusammengesetzten Zustand zweier Dachpfannen vor den beiden Verbindungselementen in Richtung der auf dem Dach höher liegenden Dachpfanne angeordnet ist. Bei dieser Ausführungsvariante ist es möglich, das zweite Verbindungselement axial aus dem ersten Verbindungselement heraus zu bewegen. Die Trennung der beiden Verbindungselemente erfolgt also nicht durch Herausnehmen nach oben, sondern durch axiales Herausbewegen. Der Drehschieber wird über eine längs zur Dachpfanne verlaufende Welle am vorderen Ende der Dachpfanne mittels eines Werkzeugs, beispielsweise eines Sechskant-Schraubwerkzeuges bedient. Nur in der Stellung "geschlossen" blockiert der Drehschieber die axiale Bewegung des ersten Verbindungselements, nur so in dieser Stellung kann das zweite Verbindungselement wie oben beschrieben in das erste Verbindungselement eingerastet und gehalten werden. In der Stellung "offen" ist der Drehschieber in eine Stellung gedreht, in dem eine Aussparung in der Fläche des Drehschieber eine Öffnung freigibt, durch die das zweite Verbindungselement aus dem ersten Verbindungelement heraus bewegt werden kann.

Vorteilhafterweise ersetzt der Drehschieber Haltenasen, über die die Dachpfanne ansonsten an einer Dachlatte eingehängt wird. Die Haltenasen hintergreifen im montierten Zustand die Dachlatte. Diese Funktion übernimmt bei dieser Ausführungsvariante nun der Drehschieber.

Damit auch die Dachpfanne selbst und nicht nur das Verbindungselement freigegeben wird, weist der Drehschieber vorzugsweise eine weitere Aussparung für die Dachlatte auf. Der Drehschieber hält im Zustand "geschlossen" also die Dachpfanne an der Dachlatte. Der Drehschieber ist bezogen auf die Breite der Dachpfanne mittig an der Oberkante der Dachlatte (im montierten Zustand) angeordnet. Um die Dachpfanne z.B. wegen einer Reparatur herausnehmen zu können, muss der Drehschieber lediglich in die Position "geöffnet" gedreht werden, damit dieser die Dachlatte nicht mehr hintergreift. Prinzipiell wird also der als Haltenasen wirkende Halteabschnitt des Drehschiebers weg gedreht. Das zweite Verbindungselement sowie die Dachpfannenhalterung werden freigegeben und die Dachpfanne kann nach vorne heraus aus der eingedeckten Dachfläche gezogen werden.

Beim Montieren einer neuen Dachpfanne als Ersatz für die entfernte Dachpfanne wird der Drehschieber zunächst in eine Position "halb geschlossen" gedreht. In dieser Position liegt die Aussparung für das zweite Verbindungselement nicht mehr vor diesem. So kann das zweite Verbindungselement in das erste gefügt und eingerastet werden. Die Dachpfanne muss dafür vor die Lücke in der Dachfläche positioniert werden, um die Verbindungselemente zusammen bringen zu können. Der Drehschieber verhindert ein axiales Herausbewegen des zweiten Verbindungselements, steht aber in Richtung des Daches bzw. in Richtung der Dachlatte nicht gegenüber der Dachpfanne vor. Dadurch kann die Dachpfanne das restliche Stück in die Dachfläche eingeschoben werden und der Drehschieber anschließend in die Position "geschlossen" gedreht werden. Damit wird die Aussparung für die Dachlatte weggedreht, der Drehschieber hintergreift die Dachlatte und hält so die Dachpfanne in ihrer Position.

Eine besonders vorteilhafte Ausführung der Verbindung von erstem und zweitem Verbindungselement ist ein Schlitten, der die Zulaufleitung und die Stromkontakte in das zweite Verbindungselement einfährt in dem Moment, in dem das erste und zweite Verbindungselement in ihre Verbindungsposition eingeführt sind. Die elektrischen Leitungen verlaufen somit auch durch den Schlitten. Das zweite Verbindungselement drückt in seiner endgültigen Verbindungsposition einen Hebel herunter, der den Schlitten freigibt, so dass dieser dann die Ablaufleitung und die Stromkontakte mittels Federkraft einführt. Dabei wird das zweite Verbindungselement einige Millimeter, vorzugsweise etwa 4 mm bis zum Anschlag an den Drehschieber gedrückt, wobei er sich an einem Hinterschnitt mit seiner vorderen Kante nach oben verriegelt.

Beim Austausch der Solardachdachpfanne (etwa bei Beschädigung) wird dieser Schlitten nach dem Ausbau der Solardachdachpfanne wieder gespannt, indem er in seine Ausgangslage zurück gedrückt wird und dort mit dem Hebel wieder einrastet.

Die Solarenergiedachpfanne ist vorzugsweise sandwichartig aufgebaut, wobei zwischen der Basispfanne, die die Elemente zur Befestigung auf einer Dachtragekonstruktion aufweist, und einem durchsichtigen Abdeckelement der Absorber mit den entsprechenden Verbindungselementen sowie das Photovoltaikmodul angeordnet sind.

Der Absorber kann aus einem oberen, nicht mediumführenden Absorberelement und einem unteren, medienführenden Absorberelement bestehen. Das obere Absorberelement ist derart gestaltet, dass es sich möglichst maximal erwärmt, insbesondere durch eine dunkle bzw. schwarze Farbgebung. Vorzugsweise sind die beiden Absorberelemente aus Metall gefertigt und miteinander verlötet oder verschweißt. Um die Herstellung besonders einfach und kostengünstig zu gestalten, hat sich das Rollschweißverfahren als bevorzugtes Verbindungsverfahren herausgestellt. Sowohl das obere Absorberelement selbst als auch die Basispfanne können durch ein Tiefziehverfahren hergestellt werden.

Ein zwischen der Basispfanne und dem Absorber bzw. dem Abdeckelement angeordnetes umlaufendes Rahmenelement dient zum einen der Befestigung der einzelnen Elemente miteinander, zum anderen wird die Dichtigkeit der Solarenergiedachpfanne erhöht.

Um die Montage zusätzlich zu erleichtern, ist das zweite Verbindungselement vorzugsweise am Absorber oder der Basispfanne geführt. Die Führung kann beispielsweise durch eine Längsnut in der Basispfanne bewirkt werden, in die ein Haltebereich des zweiten Verbindungselements hineinragt und gehalten ist. Dadurch ist gewährleistet, dass sich das zweite Verbindungselement ausschließlich entlang der Längsnut bewegen und sich insbesondere nicht verdrehen kann.

In einer besonders vorteilhaften Ausführungsvariante ist die Aufnahmeöffnung innerhalb des ersten Verbindungselementes T-Förmig und nach oben offen ausgebildet. Dementsprechend ist das zweite Verbindungselement ebenfalls T-Förmig ausgeführt und von oben in die Aufnahmeöffnung einführbar. Durch die T-Form entsteht automatisch eine Sperrung in im Wesentlichen horizontaler Zugrichtung. Damit sich die Verbindung in vertikaler Richtung nicht lösen kann, greifen federbelastete Stifte, die im ersten Verbindungselement angeordnet sind in Öffnungen des zweiten Verbindungselementes ein, die vorzugsweise in den beiden quer zur Längsausstreckung der zweite Stromleitung ausgebildeten kurzen Bereiche der T-Form angeordnet sind.

Die erfindungsgemäßen Solarenergiedachpfannen können somit schnell und einfach auf einer Dachträgerkonstruktion verlegt werden. Sie können mit eingeschobenem zweitem Verbindungselement wie handelsübliche normale Dachziegel auf das Dach befördert und dort verarbeitet werden. Dazu ist es lediglich notwendig, das Zweitverbindungselement aus der Solarenergiedachpfanne auszuziehen und über die Rastverbindung mit einem benachbarten ersten Verbindungselement zu verbinden.

Eine erste Stromleitung verläuft vorzugsweise von Kabelanschlüssen des Photovoltaikmoduls entlang der Ablaufleitung, zum zweiten Verbindungselement und ist beispielsweise an deren Außenseite befestigt oder umgibt diese spiralförmig. In einer besonders vorteilhaften Ausführungsvariante kann sie auch in die Ablaufleitung integriert sein, beispielsweise im Innern der Ablaufleitung verlaufen. In diesem Fall muss die Stromleitung für eine Verlegung in einer Flüssigkeit geeignet sein. Alternativ kann vorgesehen sein, dass die Ablaufleitung einen Hohlraum, vorzugsweise einen Längskanal in ihrer Wandung aufweist, in dem die Stromleitung verläuft. Dadurch kommt die Stromleitung nicht mit der Flüssigkeit innerhalb der Ablaufleitung in Kontakt. Schließlich ist in einer besonders vorteilhaften Ausführungsvariante die Ablaufleitung selbst zumindest bereichsweise aus elektrisch leitendem Material gefertigt. Beispielsweise können Bereiche der Ablaufleitung aus elektrisch leitendem Material gefertigt sein, die nicht mit Flüssigkeit in Kontakt kommen können.

Erfindungsgemäß wird die elektrische Verbindung der Verbindungselemente durch Kontaktflächen bewirkt, die jeweils an den Verbindungselementen angeordnet sind. Diese kontaktieren sich im zusammengesetzten Zustand der Verbindungselemente, so dass elektrischer Strom geleitet werden kann. Alternativ können Kontaktflächen aber auch an anderer Stelle der Solarenergiedachpfanne, also unabhängig von den Verbindungselementen, vorgesehen sein.

Vorzugsweise können die Aufnahme und das Einrastelement zumindest bereichsweise aus elektrisch leitendem Material gebildet sind und die Kontaktflächen zur Leitung des elektrischen Stroms ausbilden. Insbesondere können die Stifte selbst und eine Kante der Aufnahme, die die Stifte im zusammengesetzten Zustand kontaktieren, die Kontaktflächen ausbilden.

Ein Gesamtsystem zur Nutzung von Sonnenenergie weist die oben beschrieben Solarenergiedachpfannen auf, wobei zusätzlich eine Sammelleitung, vorzugsweise unterhalb der sogenannten Firstziegelreihe, und eine Speiseleitung, die vorzugsweise die sogenannte Traufbole ersetzt, vorgesehen sind. Hierzu wird die oberste, der Firstziegelreihe benachbarte Reihe Solarenergiedachpfannen über eine Sammelzuführleitung, die insbesondere elastisch ausgeführt sein kann, mit der Sammelleitung verbunden. Die Sammelzuführleitung kann ebenfalls längenveränderlich ausgeführt sein, oftmals genügt aber ein relativ weicher, flexibler Schlauch. Sie ersetzt die Ablaufleitung, ist also nicht mit dem Absorber verbunden sondern weist ein freies Ende auf, das in die Sammelleitung eingeführt werden kann.

Die der Traufbole benachbarten Sorlarthermiedachpfannen weisen Speiserzuführleitungen anstelle der Zulaufleitungen auf. Die Speiserzuführleitung kann ebenfalls längenveränderlich ausgeführt sein, aber auch hier genügt oftmals ein flexibler Schlauch. Die Speiserzuführleitung ist an das erste Verbindungselement angeschlossen, weist aber keine Verbindung zum Absorber auf, sie ist vielmehr mit ihrem freien Ende an die Speiseleitung anschließbar.

Die Sammelleitung und die Speiseleitung sind jeweils mit dem Heizsystem im Haus, vorzugsweisen dem Wärmetauscher verbunden. Entsprechende Verbindungsleitungen, eine Kaltwasserleitung zur Speiserleitung und eine Heißwasserleitung zur Sammelleitung können innerhalb oder außerhalb des Hauses verlegt werden. Als besonders vorteilhaft hat sich eine Verlegung innerhalb eines am Haus angeordneten Fallrohrs ergeben. Dieses dient zum einen der Ableitung von Regenwasser, zum Anderen können aber die Verbindungsleitungen im Inneren aufgekommen werden. Diese können in einer besonders bevorzugten Ausführungsvariante durch eine Trennwand von einem Regenwasser leitenden Bereich des Fallrohrs getrennt sein. Das Fallrohr ist für diesen Zweck also in zwei Kammern aufgeteilt.

Zusätzlich ist eine Hauptstromleitung vorgesehen, die die Photovoltaikmodule mit einer Stromeinspeisestelle im Haus verbindet. Diese kann ebenfalls durch das Fallrohr verlaufen.

Weiterhin hat es sich als vorteilhaft erwiesen, wenn neben der elektrischen Leitung für die gewonnene Energie auch ein Pilotstrom über die Verbindungselemente weitergeleitet werden kann. Dieser ist insbesondere für sogenannte CAN-Busse notwendig.

Ein wesentlicher Vorteil der Erfindung ergibt sich auch daraus, dass der Absorber bzw. die durch die Solarenergiedachpfanne geleitete Flüssigkeit zur Kühlung des Photovoltaikmoduls genutzt werden kann. Hierdurch wird der Wirkungsgrad des Photovoltaikmoduls deutlich erhöht und die abgegebene Wärme kann durch das Solarthermiesystem zusätzlich genutzt werden. Es bietet sich aus diesem Grund an, den Absorber und/oder die Zu-und Ablaufleitung derart innerhalb der Solarenergiedachpfanne anzuordnen, dass ein optimaler Wärmeübergang vom Photovoltaikmodul zum Absorber und/oder zur Zu-und Ablaufleitung gewährleistet ist. Entweder können sich die verschiedenen Elemente unmittelbar kontaktieren, oder es werden Verbindungselemente aus Materialien verwendet, die eine hohe Wärmeleitung aufweisen.

Ein wesentlicher Vorteil der beschriebenen Verbindungsform mit den erfindungsgemäßen Verbindungselementen sind die Freiheitsgrade der Verbindung in translatorischer und rotatorischer Richtung. Dies kann zusätzlich beispielsweise durch eine Gummilagerung der beiden Verbindungselemente unterstützt werden.

Die erfindungsgemäße Solardachpfanne eignet sich insbesondere für eine Verwendung mit einer ebenfalls neuen und vorteilhaften Windsogsicherung. Windsogsicherungen sind bei der Montage von Dachpfannen regional bereits vorgeschrieben. Es geht dabei darum, das Abdecken des Daches durch Sturm (Windsog) zu verhindern. Dies wird typischerweise durch Anbringen eines Drahtes bzw. einer Klammer an der Dachpfanne realisiert, der diese an der Dachlatte verankert. Das Verankern ist vergleichsweise zeitraubend, es braucht je nach Gegebenheiten vor Ort manchmal mehr Zeit als das Decken der Dachpfanne selbst. Darüber hinaus ist es äußerst schwierig, eine solche Dachpfanne (wenn sie z.B. schadhaft ist) im Dachverbund (komplett eingedecktes Dach) zu tauschen.

Die erfindungsgemäße Windsogsicherung reduziert diese Probleme. Eine Schnappkralle wird beim Auflegen der Dachpfanne auf die Dachpfanne ausgelöst, klappt mit Federkraft hinter die Dachpfanne und hakt sich dahinter. Um diese im Reparaturfalle wieder zu lösen, ist vorteilhafterweise ein Rückholmechanismus mit einer Zugstange mit Zugöse an der Unterseite der Dachpfanne im vorderen Bereich vorgesehen. Wird die Dachpfanne vorne leicht angehoben, ist möglich, mit einem Haken in die Zugöse greifen und durch Ziehen die Schnappkralle zurück in ihre Rastposition zu ziehen. Diese Rastposition ist der Auslieferungszustand und wird beim Decken des Daches, also wenn die Dachpfanne in richtiger Stellung auf die Dachlatte gelegt wird, verändert.

Das Tauschen einer klassischen Dachpfanne war schon immer relativ schwierig (auch ohne zusätzliche Windsogsicherung). Das liegt darin begründet, dass die zu tauschende Dachpfanne von der Dachlatte gehoben werden muss, obwohl zwei angrenzende Dachpfannen (darüber und in der Regel links davon) auf ihr lasten. Müssen jetzt auch noch zwei Verbindungen gelöst werden, ist dies ohne weitere Hilfsmittel nahezu unmöglich. Die Windsogsicherung mit Schnappkralle löst dieses Problem durch einen zusätzlichen Mechanismus zur Anhebung der Dachpfanne. Dafür wird eine Zugstange mit Zugöse unter der Dachpfanne am vorderen Ende gezogen, die diesmal einen Ziehkeil zwischen Dachpfanne und Dachlatte betätigt, um die Dachpfanne anzuheben.

Eine weitere erfindungsgemäße Verbesserung bzw. Alternative besteht darin, eine weitere Zugstange mit Zugöse am vorderen Ende der Dachpfanne zu betätigen, um die Verbindung zwischen den Dachpfannen durch Betätigung eines Auswerfers zu lösen (um einen Pater aus einer Mater auszuwerfen). Dies macht ein Aushebewerkzeug entbehrlich.

Die drei beschriebenen Zugösen befinden sich alle unterhalb der Dachpfanne am unteren Ende. Die Zugösen stehen senkrecht stehen und würden aus der Unterseite der Dachpfanne "ausfedern" sobald man diese vorne anhebt. Vorteilhafterweise ist dabei eine Öse leicht versetzt von der Mitte der Dachpfanne (Mitte der Vorderseite) angeordnet und löst die Verbindung aus. Diese Position ist vorteilhaft, weil die Verbindung genau in der Mitte der Dachpfanne liegt angeordnet ist. Einige Zentimeter versetzt dazu, beispielsweise etwa 3 cm links davon ist erfindungsgemäß die Zugöse für die Schnappkralle der Windsogsicherung positioniert. Diese Position ist vorteilhaft, weil die klassische Windsogsicherung immer an der linken Dachpfannenseite vorgesehen ist. Auf der anderen Seite, einige Zentimeter rechts von der Mitte, vorzugsweise ebenfalls 3 cm rechts von der Mitte, ist vorzugsweise Zugöse für den Ziehkeil angeordnet, die der Anhebung der Dachpfanne dient.

Erfindungsgemäß ist auch eine Zusammenlegung der Zugösen für die Schnappkralle und den Dachpfannen-Heber denkbar. Dabei wäre die Abfolge der Art, dass in der ersten Hälfte des Zugweges die Schnappfalle zurückgezogen wird und in der zweiten Hälfte des Zugweges der Ziehkeil zum Heben der Pfanne betätigt wird. Vorzugsweise ist ein Federelement vorgesehen, über das der Zug auf der Schnappkralle erhalten bleibt, damit diese beim Heben nicht zurück schnappt.

Alternativ kann eine Windsogsicherung auch durch eine Schraube längs durch die Dachpfanne erfolgen, quer in das untere Drittel der Dachlatte eingeschraubt ist. Die Schraube ist etwa in der Mitte der Dachpfanne angeordnet. Bei der Verwendung eines Drehschiebers ist sie dem Drehschieber genau gegenüber liegend positioniert. Gedreht wird die Schraube an der Vorderseite der Dachpfanne. Sie ist für den Drehschieber unten links von der mittigen Erhöhung der Dachpfanne angeordnet und die Schraube für die Windsogsicherung unten rechts davon. Dies hat den Vorteil, dass diese optisch kaum auffallen, zumal wenn diese in schwarzer Oberfläche (passend zur Dachpfannenanmutung) ausgeführt sind.

Die Erfindung wird anhand der nachfolgenden Figuren näher erläutert. Diese zeigen ein bevorzugtes Ausführungsbeispiel der Erfindung, das die Erfindung aber nicht auf die gezeigten Merkmale beschränken soll. Es zeigen:
- Figur 1:: eine erfindungsgemäße Solarenergiedachpfanne in Explosivdarstellung,
- Figur 2:: einen Abschnitt eines Daches, das mit erfindungsgemäßen Solarenergiedachpfannen gedeckt ist,
- Figur 3:: eine Reihe verlegter Solarenergiedachpfannen im Querschnitt,
- Figur 4:: eine Ausschnittsvergrößerung aus Figur 3,
- Figur 5:: eine wasserführende Einheit der Solarenergiedachpfanne im Längsschnitt,
- Figur 6:: eine erfindungsgemäße Solarenergiedachpfanne im Längsschnitt, mit ausgezogenem Verbindungselement
- Figur 7:: eine erfindungsgemäße Solarenergiedachpfanne in Draufsicht,
- Figur 8:: zwei Verbindungselemente zweier Solarenergiedachpfannen in zusammengefügtem Zustand,
- Figur 9:: einen Lösevorgangs der Verbindung aus Figur 8 mit Hilfe eines Werkzeugs,
- Figur 10:: eine stark vereinfachte Darstellung eines erfindungsgemäßen Systems zur Gewinnung von thermischer und elektrischer Energie,
- Figur 11:: eine Anbindung von Solarenergiedachpfannen an eine Speiserleitung,
- Figur 12:: eine Anbindung der Solarenergiedachpfannen an eine Sammelleitung,
- Figur 13:: ein Fallrohr mit Verbindungsleitungen im Querschnitt,
- Figur 14:: eine alternative Verbindungsmöglichkeit mittels Drechschieber in einer Prinzipdarstellung,
- Figur 15:: die alternative Verbindungsmöglichkeit aus Fig. 14 mit zusätzlichem Schlitten,
- Figur 16:: eine perspektivische Darstellung des Schlittens.

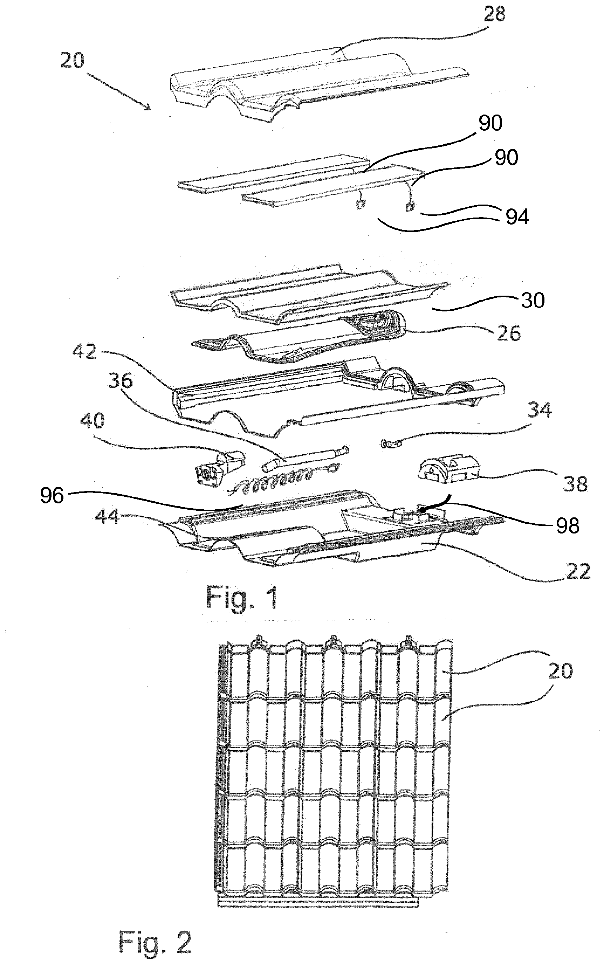

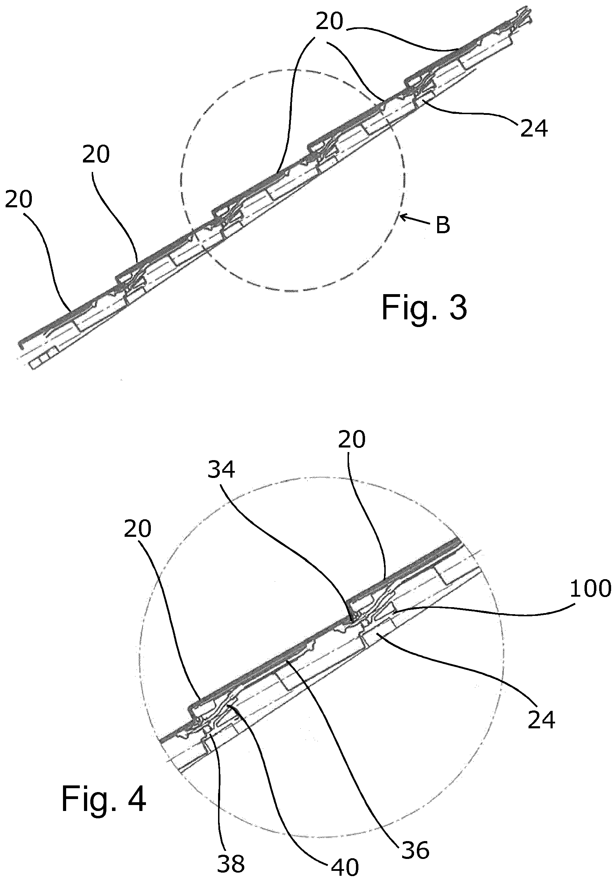

Figur 1 zeigt eine bevorzugte Ausführung einer erfindungsgemäßen Solarenergiedachpfanne 20 in einer Explosivdarstellung. Prinzipiell ist die Solarenergiedachpfanne 20 in Sandwichbauweise ausgeführt. Ausgehend von einer Basispfanne 22, die eine Unterseite einer Solarenergiedachpfanne 20 ausbildet und auf eine Dachtragekonstruktion 24 (vgl. auch Figur 3) aufgelegt wird, folgt ein Absorber 26 und vorzugsweise eine durchsichtige oder transluszente Abdeckung 28. Erkennbar ist, dass der Absorber 26 aus einem oberen Absorberelement 30 und einem unteren Absorberelement 32 gebildet ist.

Zwischen der Abdeckung 28 und dem oberen Absorberelement 30 sind im gezeigten Ausführungsbeispiel zwei Photovoltaikmodule 90 nebeneinander angeordnet. Die Photovoltaikmodule 90 liegen auf dem oberen Absorberelement 30 auf, um eine optimale Wärmeübertragung zu gewährleisten. Die Photovoltaikmodule 90 und das obere Absorberelement 30 sind vorzugsweise mit wärmeleitendem Klebstoff miteinander verklebt.

Denkbar ist auch kombiniertes Element, welches das obere Absorberelement 30 und das Photovoltaikmodul 90 gemeinsam vorzugsweise nebeneinander angeordnet ausbildet.

Die Abdeckung 28 weist in etwa die gleiche Form wie das obere Absorberelement 30 auf und deckt dieses somit vollständig ab. Das untere Absorberelement 32 wird von einer nichtgezeigten Flüssigkeit durchströmt. Dazu ist es mit einer Zulaufleitung 34 und einer Ablaufleitung 36 verbunden. An die Zulaufleitung 34 schließt sich ein erstes Verbindungselement 38 und an die Ablaufleitung ein zweites Verbindungselement 40 an. Die beiden Verbindungselemente 38, 40 können jeweils mit einem korrespondierenden Verbindungselement 38, 40 einer benachbarten Solarenergiedachpfanne 20 verbunden werden.

Weiterhin ist ein Rahmen 42 gezeigt, der etwa die Abmessungen der Basispfanne 22 aufweist und zur Aufnahme des Absorbers 26 dient. Außerdem liegt die Abdeckung 28 im gezeigten Ausführungsbeispiel auf dem Rahmen 42 auf und ist mit diesem verbunden.

Das zweite Verbindungselement 40 ist in einer Längsnut 44 der Basispfanne 22 geführt ist. Dies erleichtert die Montage der Solarenergiedachpfanne 20 durch ein definiertes Ausziehen des zweiten Verbindungselements 40 deutlich. Die Längsnut 44 verhindert weiterhin ein Verdrehen des zweiten Verbindungselements 40.

Schließlich ist wesentlich, dass die Ablaufleitung 36, die zwischen dem unteren Absorberelement 32 und dem zweiten Verbindungselement 40 angeordnet ist, längenveränderlich ausgeführt ist. Im gezeigten Ausführungsbeispiel ist diese als Trompetenrohr ausgeführt, das aus zwei ineinander verschiebbaren Rohrabschnitten unterschiedlichen Durchmessers gebildet ist.

Die Photovoltaikmodule 90 weisen elektrische Kabelanschlüsse 94 auf. Weiterhin ist eine erste Stromleitung 96 gezeigt, die spiralförmig um die Ablaufleitung 36 des Absorbers 26 verläuft und mit dem zweiten Verbindungselement 40 verbunden ist. Eine zweite Stromleitung 98 ist mit dem ersten Verbindungselement 38 verbunden. Die erste Stromleitung 96, die zweite Stromleitung 98 und die Kabelanschlüsse 94 werden derart miteinander verbunden, vorzugsweise über ein nicht gezeigtes Steckelement, dass mehrere Solarenergiedachpfannen 20 aufsteigend parallel miteinander verschaltet sind.

In einer besonders vorteilhaften Ausführungsvariante, die hier nicht gezeigt ist, ist die erst Stromleitung 96 innerhalb der Ablaufleitung 36 angeordnet. Sie kann dabei im Innern der Ablaufleitung 36 verlaufen, die Ablaufleitung 36 kann aber auch einen Hohlraum, vorzugsweise einen Längskanal in ihrer Wandung aufweisen, in dem die erste Stromleitung 96 verläuft. Dies hat den Vorteil, dass die Stromleitung 96 nicht mit der Flüssigkeit in Kontakt kommen kann.

In der gezeigten Ausführungsvariante weisen die beiden Verbindungselemente 38, 40 jeweils eine elektrische Kontaktfläche auf, die wiederum mit der zugehörigen Stromleitung 96, 98 elektrisch leitend verbunden ist, wobei sich die Kontaktflächen im zusammengefügte Zustand zweier Verbindungselemente 38, 40 kontaktieren und somit die elektrische Verbindung bewirken.

Aus den Figuren 2 bis 4 wird die Verlegung erfindungsgemäßer Solarenergiedachpfannen 20 auf einem Dach bzw. einer Dachtragekonstruktion 24 deutlich. Figur 2 zeigt einen Bereich eines Daches in Draufsicht, Figur 3 einen Längsschnitt durch eine Reihe Solarenergiedachpfannen 20 und Figur 4 eine vergrößerte Ansicht des Bereichs B aus Figur 3.

Erkennbar ist, dass sich die miteinander verbundenen Solarenergiedachpfannen 20 bereichsweise überdecken, wie dies auch bei einer üblichen Dacheindeckung mit normalen Dachziegeln der Fall ist. Sie liegen dabei mit ihrer Unterseite, also der Unterseite der Basispfanne 22 auf der Dachtragekonstruktion 24 auf. Insbesondere Fig. 4 zeigt, dass jeweils benachbarte, insbesondere übereinander angeordnete Solarenergiedachpfannen 20 über die Verbindungselemente 38, 40 miteinander verbunden sind. Somit wird durchströmende Flüssigkeit von einer Solarenergiedachpfanne 20 durch die Zulaufleitung 34, die beiden Verbindungselemente 38, 40, den Absorber 26 und die Ablaufleitung 36 bzw. elektrischer Strom durch die Kabelanschlüsse 94, die beiden Stromleitungen 96,98 und das Photovoltaikmodul 90 zur nächsten Solarenergiedachpfanne 20 weitergeleitet.

Wie insbesondere Figur 4 zeigt, werden die Solarenergiedachpfannen 20 über Haltenasen 100 an der der Dachtragekonstruktion 24, insbesondere Dachlatten, eingehängt. Die Haltenasen hintergreifen die Dachtragekonstruktion 24.

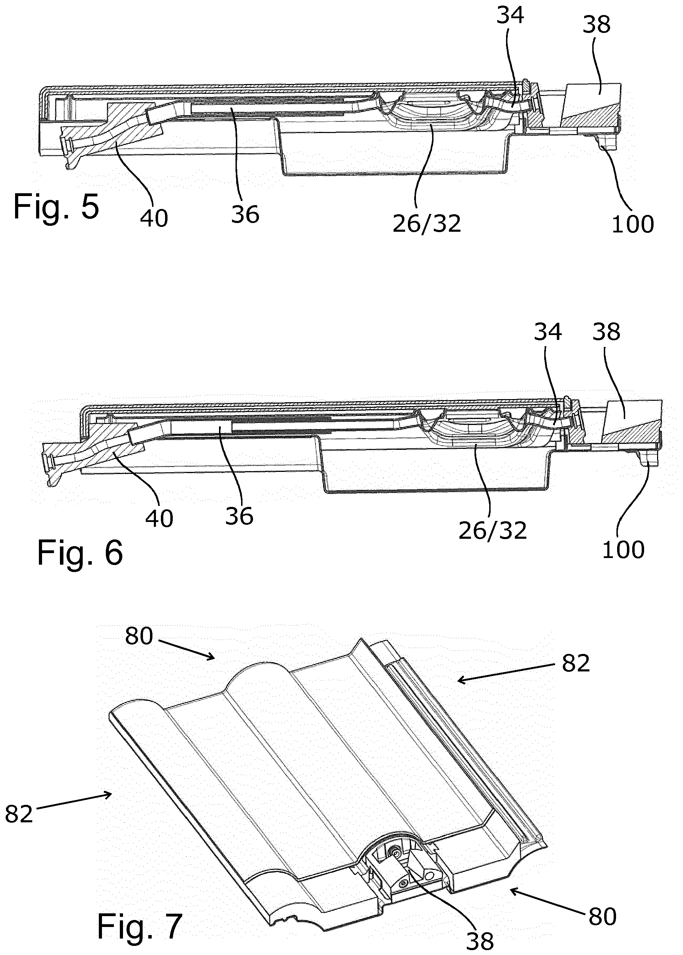

Figur 5 verdeutlicht den Aufbau der erfindungsgemäßen Solarenergiedachpfanne 20. Erkennbar ist, dass sich an das erste Verbindungselement 38 die Zulaufleitung 34 anschließt und zum unteren Absorberelement 32 führt. Nachdem die Flüssigkeit das untere Absorberelement 32 durchströmt und sich dabei entsprechend aufgewärmt hat, gelangt sie durch die Ablaufleitung 36 zum zweiten Verbindungselement 40.

Für die Verlegung der Solarenergiedachpfannen 20 ist weiterhin von Vorteil, dass der Absorber 26, insbesondere das obere Absorberelement 30 und auch die Abdeckung 28 das erste Verbindungselement 38 nicht vollflächig abdecken, sodass dieses beim Eindecken des Daches leicht zugänglich bleibt. Das erste Verbindungselement 38 wird letztendlich erst von der verlegten benachbarten Solarenergiedachpfanne 20 überdeckt und ist dadurch im montierten Zustand nicht mehr einsehbar.

Figur 6 zeigt einen Längsschnitt einer Solarenergiedachpfanne 20 mit ausgezogenem zweiten Verbindungselement 40. Die Ablaufleitung 36, im gezeigten Ausführungsbeispiel, ausgeführt als Trompetenrohr, ist längenveränderlich ausgeführt, sodass das zweite Verbindungselement 40 über die Außenabmessungen der Solarenergiedachpfanne 20 herausgezogen werden kann. Es steht dann seitlich gegenüber der entsprechenden Kante oder Seite der Solarenergiedachpfanne 20 vor und kann problemlos mit einem benachbarten ersten Verbindungselement 38 verbunden werden.

Figur 7 verdeutlicht durch eine Darstellung der Solarenergiedachpfanne 20 in Draufsicht, dass im Grundzustand keine Elemente über die Außenabmessungen der Solarenergiedachpfanne 20 vorstehen. Die Außenabmessungen werden durch die beiden Querseiten 80 und die beiden Längsseiten 82 bestimmt. Ebenfalls erkennbar ist, dass eine Aufnahmeöffnung 46 des ersten Verbindungselements 38 im Grundzustand nicht durch den Absorber 26 oder die Abdeckung 28 abgedeckt, sondern nach oben, also in die von der Basispfanne 22 wegweisende Richtung, geöffnet ist. Die Aufnahmeöffnung 46 ist im Wesentlich T-förmig ausgeführt.

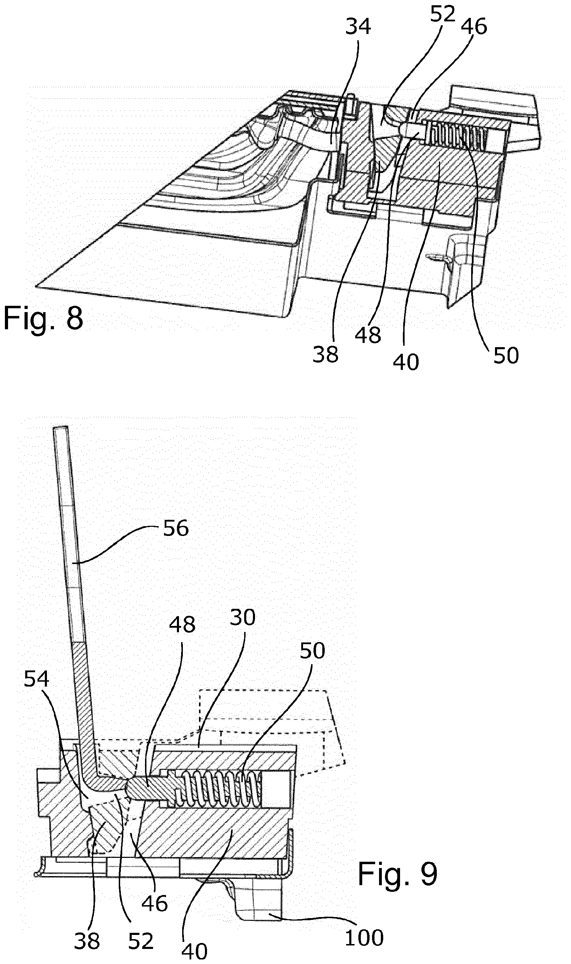

Die Figuren 8 und 9 verdeutlichen die vorteilhafte Verbindung zweier Solarenergiedachpfannen 20 über die beiden Verbindungselemente 38, 40. Die beiden Verbindungselemente 38, 40 sind im Längsschnitt gezeigt, wobei die Ablaufleitung 36 nicht gezeichnet ist. Erkennbar ist die Aufnahmeöffnung 46 (oder auch Aufnahmevertiefung), in die das zweite Verbindungselement 40 einführbar ist. Die T-Form bewirkt, das die Verbindung in im Wesentlichen horizontaler Richtung, also in Auszugrichtung des zweiten Verbindungselements 40 gesichert ist, sich die beiden Verbindungselemente 38, 40 also nicht voneinander lösen können.

Zusätzlich sind als Einrastelemente federbelastete Stifte 48 erkennbar. Im gezeigten Ausführungsbeispiel sind zwei Stifte 48 vorgesehen, die jeweils parallel ausgerichtet neben der Ablaufleitung 36 angeordnet sind.

Ein Federelement 50 treibt den jeweiligen Stift 48 in Richtung einer Aufnahme 52, die im zweiten Verbindungselement 40 angeordnet ist. Dadurch ergibt sich eine Rast- oder Klickverbindung, die auch in im Wesentlichen vertikaler Richtung, also quer zur Auszugsrichtung des zweiten Verbindungselements 40 sichert.

Die Stifte 48 weisen dabei jeweils ein konisch ausgeformtes freies Ende auf, dessen Durchmesser derart bemessen ist, das die Stifte 48 nicht vollständig in die jeweilige Aufnahme 52 eingeführt werden. Dadurch wird erreicht, dass die Federkraft des Federelements 50 gegen eine entsprechende Kante der jeweiligen Aufnahme 52 wirkt und somit das zweite Verbindungselement 40 gegen eine gegenüberliegende Öffnung der Zulaufleitung 34 drückt. Die Öffnungen der Ablaufleitung 36 und der Zulaufleitung 34 liegen dort aneinander an. Der Druck des Federelementes 50 führt dazu, dass eine dichte Verbindung zwischen den beiden Verbindungselemente 38, 40 und die elektrische Verbindung zwischen den Kontaktflächen gewährleistet ist.

Im gezeigten Ausführungsbeispiel dienen eine Kante der Aufnahme 52 und die Außenfläche der Stifte 48 als Kontaktflächen für die elektrische Verbindung der beiden Verbindungselemente 38, 40.

Figur 9 zeigt weiterhin, dass sich in zusammengesetzten Zustand der beiden Verbindungselemente 38, 40 eine Zugangsöffnung 54 für ein Werkzeug 56 ergibt. In diese Zugangsöffnung 54 ist ein winklig geformtes Werkzeug 56 einführbar, über das die beiden Stifte 48 gegen die Federkraft des Federelementes 50 zurückdrückt werden können, was ein Lösen der beiden Verbindungselemente 38, 40 voneinander ermöglicht.

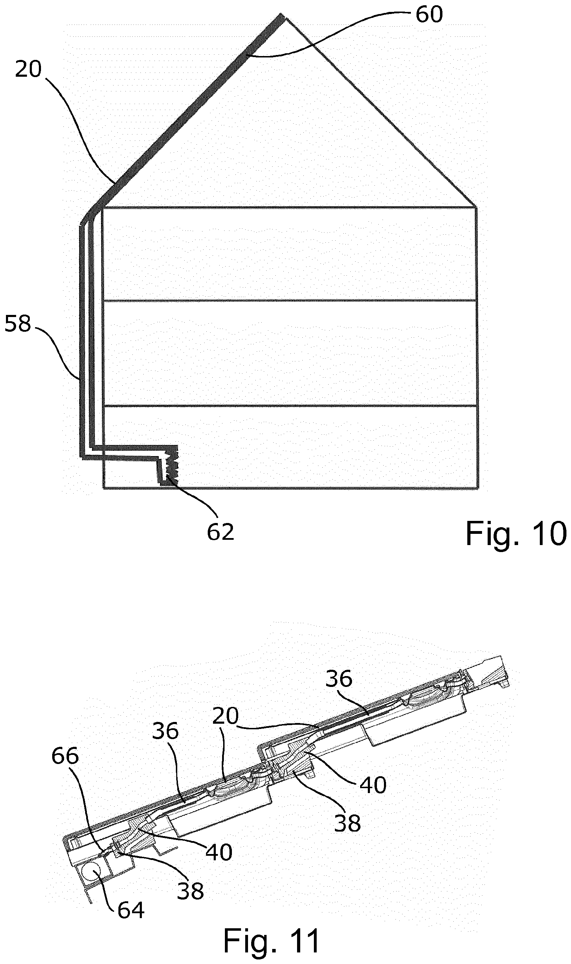

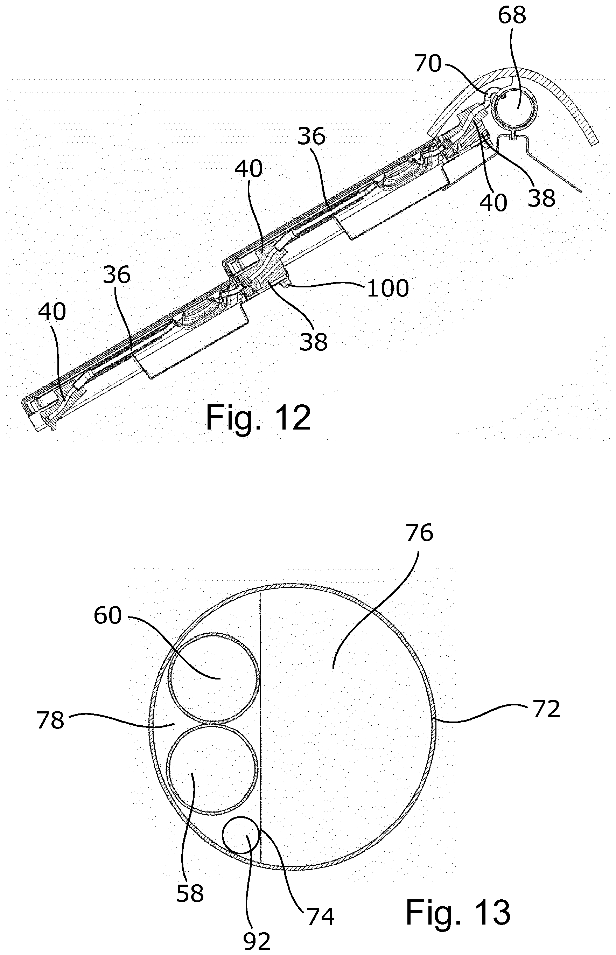

Aus Figur 10 wird deutlich, wie ein System aufgebaut ist, das erfindungsgemäße Solarenergiedachpfannen 20 nutzt. Über eine Kaltwasserleitung 58 wird den Solarenergiedachpfannen 20 relativ kalte Flüssigkeit zugeleitet. Diese erwärmt sich beim Durchströmen der miteinander verbunden Solarenergiedachpfannen 20 und wird über eine Heißwasserleitung 60 zu einem Wärmetauscher 62 oder alternativ zu einer direkten Nutzung zurückgeführt. Die beiden Verbindungsleitungen, also die Kaltwasserleitung 58 und die Heißwasserleitung 60 verbinden die Solarenergiedachpfannen 20 mit einem Nutzungssystem, beispielsweise einem Wassersystem eines Hauses. Parallel zur Kaltwasserleitung 58 und zur Heißwasserleitung 60 verläuft eine Hauptstromleitung 92 (siehe Figur 13). Die Hauptstromleitung 92 kann abschnittsweise im Bereich einer Traufbohle des Daches angeordnet sein.

Figur 11 verdeutlicht die Zuführung der relativ kalten Flüssigkeit über eine Speiserleitung 64 zu den Solarenergiedachpfannen 20. Die Speiserleitung 64 ist vorzugsweise im Bereich einer Traufbohle des Daches angeordnet. Eine Reihe von Solarenergiedachpfanne 20, die im Randbereich einer Fläche von erfindungsgemäßen Solarenergiedachpfannen 20 angeordnet sind, bei einem Dach vorzugsweise untere Reihe, ist über eine Speiserzuführleitung 66 an die Speiserleitung 64 angebunden. Die Speiserzuführleitung 66 verbindet die Speiserleitung 64 mit jeweils dem ersten Verbindungselement 38 einer Solarenergiedachpfanne 20.

Figur 12 zeigt die Anbindung der Solarenergiedachpfannen 20 der obersten Reihe an eine Sammelleitung 68. Eine Sammelzuführleitung 70 erstreckt sich vom zweiten Verbindungselement 38 in die Sammelleitung 68 hinein und speist diese mit erwärmter Flüssigkeit.

Figur 13 verdeutlicht eine vorteilhafte Verlegung der Verbindungsleitungen, nämlich der Kaltwasserleitung 58 und der Heißwasserleitung 60 sowie der Hauptstromleitung 92 streckenweise innerhalb eines Fallrohrs 72. Für diesen Fall ist das Fallrohr 72 vorzugsweise durch eine Trennwand 74 in zwei Kammern unterteilt, wobei eine erste Kammer 76 der Ableitung von Regenwasser dient, eine zweite Kammer 78 der Aufnahme der beiden Verbindungsleitungen 58, 60 und der Hauptstromleitung 92. Diese Art der Verlegung ist zum Einen kostengünstig und schnell durchführbar, zum Anderen wird das äußere Erscheinungsbild des Hauses nicht negativ beeinflusst.

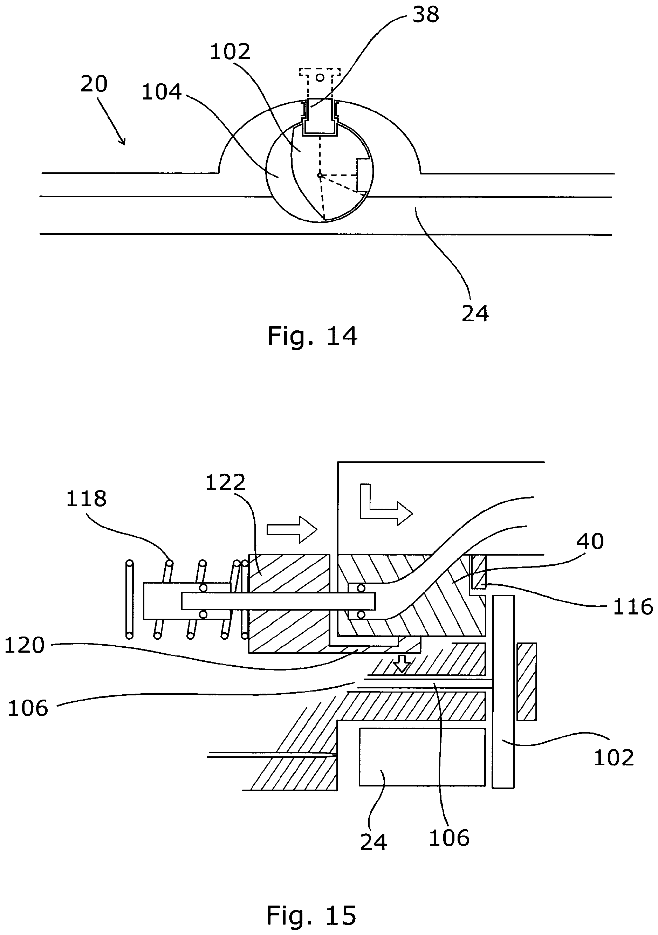

Die Figuren 14 und 15 zeigen eine alternative Verbindungsmöglichkeit mittels einem Drechschieber 102 in einer Prinzipdarstellung. Der Drehschieber 102 ersetzt die Haltenasen 100 und ist dementsprechend etwa in diesem Bereich angeordnet. Über den Drehschieber 102 wird die erfindungsgemäße Solarenergiedachpfannen 20 an der Dachtragekonstruktion 24 eingehängt.

Der Drehschieber 102 weist einen Freiraum 104 auf, über den die Dachtragekonstruktion 24 sozusagen freigegeben werden kann, damit die Solarenergiedachpfanne 20 axialer Richtung bewegbar ist. Zum Herausziehen oder Einführen der Solarenergiedachpfann 20 muss dafür der Drehschieber 102 in die entsprechende Position gedreht werden, sodass er die Dachtragekonstruktion 24 nicht mehr hintergreift. Hierzu weist der Drehschieber 102 eine Drehachse 106 auf (vergleiche Figur 15).

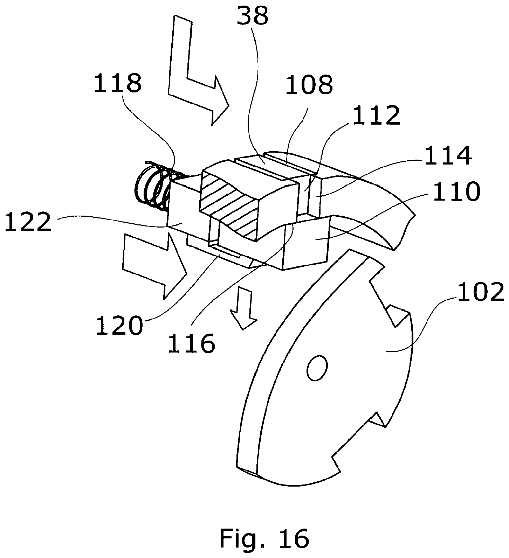

Der Drehschieber 102 wird gleichzeitig als Anschlag für das zweite Verbindungselement 40, welches ansonsten in axialer Richtung weiter bewegt werden könnte. Dies ergibt sich insbesondere auch aus Figur 16. Das zweite Verbindungselement 40 ist in einer Aufnahme 108 geführt und weist einen stufigen Aufbau auf, mit einem unteren Grundkörper 110 und einem oberen Grundkörper 112, wobei der untere Grundkörper 110 in Querrichtung zur Längsachse der Solarenergiedachpfanne 20 breiter als der obere Grundkörper 112 ausgeführt ist.

Die Aufnahme 108 weist eine Durchgangsöffnung 114 auf, durch die der obere Grundkörper 112 aufgrund seiner geringeren Breite axial durchführbar ist, der untere Grundkörper 110 dagegen nicht. Weiterhin ist ein Hinterschnitt 116 im Bereich der Durchgangsöffnung 114 vorgesehen, an den sich der untere Grundkörper 110 von unten abstützt und somit nicht nach oben aus der Aufnahme 108 herausgeführt werden kann.

Figur 16 zeigt eine weitere vorteilhafte Ausführungsvariante, bei der neben dem Drehschieber 102 zusätzlich ein Schlitten 122 vorgesehen ist, der die Verbindung erleichtert und sichert. Der Schlitten 122 ist über eine Druckfeder 118 federbeaufschlagt und in seiner Grundposition vorgespannt. Ein Hebel 120 hält den Schlitten 116 in seiner vorgespannten Position indem er einen Anschlag kontaktiert. Wird das zweite Verbindungselement 40 in das erste Verbindungelement 38 von oben eingeführt, wird der Hebel 120 nach unten gedrückt, kommt außer Eingriff mit dem Anschlag und und gibt die Federkraft frei. Der Schlitten 116 bewegt sich in Richtung des Drehschiebers 102 und kontaktiert diesen. Dabei befindet er sich mit seinem unteren Grundkörper 110 unterhalb der beiden Hinterschnitte 116. Somit ist das zweite Verbindungselement 40 sowohl in axialer Richtung durch den Drehschieber 102, als auch in vertikaler Richtung durch die Hinterschnitte 116 gehalten. Das Vorschieben des Schlittens 122 bewirkt auch, dass sich ein Leitungsabschnitt 126, der Teil der Zulaufleitung 34 ist, in die Ablaufleitung 36 des zweiten Verbindungselements 40 einschiebt. Weiterhin werden elektrische Kontakte zur Weiterleitung der elektrischen Energie geschlossen (nicht gezeigt).

Figur 15 zeigt weiterhin eine Sicherungsschraube, über die die Solarenergiedachpfanne 20 mit der Dachtragekonstruktion 24 beispielsweise als Windsogsicherung verschraubbar ist.

Die Erfindung ist nicht auf die gezeigten und dargestellten Ausführungsbeispiele beschränkt, sondern umfasst auch weitere mögliche Ausführungsformen. Insbesondere können anstelle der Ablaufleitung 36 die Zulaufleitung 34 oder auch beide Leitungen 34, 36 längenveränderlich ausgeführt sein. Denkbar ist auch, dass anstelle der Basispfanne 22 der Absorber 26 unmittelbar der Befestigung auf der Dachkonstruktion 24 dient, die Basispfanne 22 also eingespart werden kann.

## Patentansprüche

1. Solarenergiedachpfanne (20) zur Gewinnung elektrischer und thermischer Energie aus Sonnenstrahlung, deren Form im Wesentlichen der Form einer herkömmlichen Dachpfanne entspricht, mit einer Basispfanne (22), die der Befestigung der Solarenergiedachpfanne (20) auf einem Dach dient und weiter aufweisend
- ein oberseitig angeordnetes Photovoltaikmodul (90), das mit einer ersten Stromleitung (96) und einer zweiten Stromleitung 98) verbunden ist, und
- einen von einem Medium durchströmten Absorber (26) mit einer Zulaufleitung (34) und einer Ablaufleitung (36),
wobei
- die Zulaufleitung (34) an ihrem freien Ende ein erstes Verbindungelement (38) aufweist,
- die Ablaufleitung (36) an ihrem freien Ende ein zweites Verbindungselement (40) aufweist,
**dadurch gekennzeichnet, dass**
- zumindest eine der Zulauf- oder Ablaufleitungen (34, 36) längenveränderlich ausgeführt ist,
- in einem Grundzustand beide Verbindungselemente (38, 40) innerhalb äußerer Abmessungen der Solarenergiedachpfanne (20) angeordnet sind,
- in einem Montagezustand zumindest eines der beiden Verbindungselement (38, 40) über die äußeren Abmessungen der Solarenergiedachpfanne (20) herausziehbar ist und mit einem korrespondierenden Verbindungselement (38, 40) einer benachbarten Solarenergiedachpfanne (20) medienleitend und elektrisch leitend verbindbar ist,
- die längenveränderliche Leitung (34, 36) eine der beiden Stromleitungen (96. 98) beinhaltet.

2. Solarenergiedachpfanne (20) nach Anspruch 1, **dadurch gekennzeichnet, dass** die erste Stromleitung (96) entlang der Ablaufleitung (38) verläuft.

3. Solarenergiedachpfanne (20) nach Anspruch 1 oder Anspruch 2, **dadurch gekennzeichnet, dass** die erste Stromleitung (96) in die Ablaufleitung (38) integriert ist.

4. Solarenergiedachpfanne (20) nach Anspruch 2 oder Anspruch 3, **dadurch gekennzeichnet, dass** die beiden Verbindungselemente (38, 40) jeweils eine elektrische Kontaktfläche aufweisen, die jeweils über eine zugehörige Stromleitung (96, 98) elektrisch leitend mit dem Photovoltaikmodul (90) verbunden ist, wobei sich die Kontaktflächen im zusammengefügte Zustand zweier Verbindungselemente (38, 40) kontaktieren und die elektrische Verbindung bewirken.

5. Solarenergiedachpfanne (20) nach einem der Ansprüche 1 bis 4, **dadurch gekennzeichnet, dass** die Ablaufleitung (34) längenveränderlich ausgeführt ist und das erste Verbindungselement (38) und die Zulaufleitung (34) ortsfest innerhalb der Solarenergiedachpfanne (20) angeordnet sind.

6. Solarenergiedachpfanne (20) nach einem der Ansprüche 1 bis 5, **dadurch gekennzeichnet, dass** die die beiden Verbindungselemente (38, 40) derart ausgebildet sind, dass sie eine Rastverbindung ausbilden.

7. Solarenergiedachpfanne (20) nach einem Ansprüche 1 bis 6, **dadurch gekennzeichnet, dass** das erste Verbindungselement (38) eine nach oben geöffnete, in horizontaler Ebene T-förmige Aufnahmeöffnung (46) zur Aufnahme des ebenfalls T-förmig ausgebildeten zweiten Verbindungselements (40) aufweist.

8. Solarenergiedachpfanne (20) nach Anspruch 7, **dadurch gekennzeichnet, dass** das zweite Verbindungselement (40) zumindest eine Aufnahme (52) aufweist, in die ein im ersten Verbindungselement (38) angeordnetes Einrastelement einrastbar ist.

9. Solarenergiedachpfanne (20) nach Anspruch 8, **dadurch gekennzeichnet, dass** das Einrastelement als federbelasteter Stift (48) ausgeführt ist, wobei die Aufnahme (52) und der Stift (48) im Wesentlichen in horizontaler Richtung ausgerichtet sind.

10. Solarenergiedachpfanne (20) nach Anspruch 9, **dadurch gekennzeichnet, dass** die Aufnahme (52) und das Einrastelement zumindest bereichsweise aus elektrisch leitendem Material gebildet sind und die elektrische leitenden Kontaktflächen ausbilden.

11. Solarenergiedachpfanne (20) nach Anspruch 10, **dadurch gekennzeichnet, dass** das freie Ende des Stiftes (48) derart konisch zulaufend ausgeführt ist, dass dieser eine die Aufnahme (52) begrenzende Kante kontaktiert.

12. Solarenergiedachpfanne (20) nach einem der Ansprüche 9 bis 11, **dadurch gekennzeichnet, dass** die beiden Verbindungselemente (38, 40) in zusammengesetzten Zustand der beiden Verbindungselemente (38, 40) eine Zugangsöffnung (54) für ein Werkzeug (56) ausbilden, über das der Stift (48) zurückgedrückt werden kann, was ein Lösen der beiden Verbindungselemente (38, 40) voneinander ermöglicht.

13. Solarsystem zur Gewinnung von Energie aus Sonnenstrahlung, aufweisend miteinander verbundene Solarenergiedachpfannen (20) gemäß der Ansprüche 1 bis 12, die über eine Kaltwasserleitung (58) und eine Heißwasserleitung (60) und über eine Hauptstromleitung (92) an ein Nutzungssystem angebunden sind.

14. Solarsystem nach Anspruch 13, **dadurch gekennzeichnet, dass**
- Solarenergiedachpfannen (20) im Randbereich einer Fläche von erfindungsgemäßen Solarenergiedachpfannen (20) jeweils über eine Speiserzuführleitung (66) an eine Speiserleitung (64) angebunden sind, die mit der Kaltwasserleitung (58) verbunden ist,
- Solarenergiedachpfannen (20) im gegenüberliegenden Randbereich der Fläche jeweils über eine Sammelzuführleitung (70) an eine Sammelleitung (68) angebunden sind, die mit der Heißwasserleitung (60) verbunden ist.

15. Solarsystem nach Anspruch 13 oder Anspruch 14, **dadurch gekennzeichnet, dass** die Kaltwasserleitung (58), die Heißwasserleitung (60) und die Hauptstromleitung (92) streckenweise in einem Fallrohr (72) angeordnet sind.

## Claims

1. A solar energy roof tile (20) for generating electrical and thermal energy from solar radiation, the form of which solar roof tile essentially corresponds to the shape of a conventional roof tile, with a base tile (22) which is used to attach the solar energy roof tile (20) to a roof, furthermore having
- a photovoltaic module (90) arranged on the top side, which module is connected to a first electrical line (96) and a second electrical line (98), and
- an absorber, through which a medium (26) circulates and which has an inlet line (34) and an outlet line (36),
wherein
- the inlet line (34) has a first connecting element (38) at its free end, and
- the outlet line (36) has a second connecting element (40) at its free end,
**characterized in that**
- at least one of the inlet or outlet lines (34, 36) are designed to be variable in length,
- in a basic state, both connecting elements (38, 40) are arranged within the outer dimensions of the solar energy roof tile (20),
- in an assembly state, at least one of the two fasteners (38, 40) can be pulled out beyond the external dimensions of the solar energy roof tile (20) and can be connected with a corresponding connecting element (38, 40) of a neighbouring solar energy roof tile (20) in a media-transporting and electrically conductive manner,
- the line (34, 36), which is variable in length, contains one of the two electrical lines (96, 98).

2. The solar energy roof tile (20) according to Claim 1, **characterized in that** the first electrical line (96) extends alongside the outlet line (38).

3. The solar energy roof tile (20) according to Claim 1 or Claim 2, **characterized in that** the first electrical line (96) extends alongside the outlet line (38).

4. The solar energy roof tile (20) according to Claim 2 or Claim 3, **characterized in that** each of the two connecting elements (38, 40) has a respective electrical contact surface, which respective contact surface is connected via an associated electrical line (96, 98) in an electrically conductive manner with the photovoltaic module (90), wherein the contact surfaces of two connecting elements (38, 40) in their joined state make contact with each other and cause the electrical connection.

5. The solar energy roof tile (20) according to any one of Claims 1 to 4, **characterized in that** the outlet line (34) is designed to be variable in length and that the first connecting element (38) and the inlet line (34) are arranged at a fixed location within the solar energy roof tile (20).

6. The solar energy roof tile (20) according to any one of Claims 1 to 5, **characterized in that** the two connecting elements (38, 40) are designed such that they form a locking connection.

7. The solar energy roof tile (20) according to a Claim 1 to 6, **characterized in that** the first connecting element (38) has an opening (46) which opens upward and which is T-shaped in the horizontal plane for receiving the also T-shaped second connecting element (40).

8. The solar energy roof tile (20) according to Claim 7, **characterized in that** the second connecting element (40) has at least one receptacle (52) into which a locking element arranged in the first connecting element (38) can be snapped.

9. The solar energy roof tile (20) according to Claim 8, **characterized in that** the locking element is designed as a spring-loaded pin (48), wherein the receptacle (52) and the pin (48) are essentially aligned in the horizontal direction.

10. The solar energy roof tile (20) according to Claim 9, **characterized in that** the receptacle (52) and the locking element are formed at least partially from electrically conductive material and that they form the electrically conductive contact surfaces.

11. The solar energy roof tile (20) according to Claim 10, **characterized in that** the free end of the pin (48) is designed conically in such a manner that it contacts an edge confining the receptacle (52).

12. The solar energy roof tile (20) according to any one of Claims 9 to 11, **characterized in that** the two connecting elements (38, 40) in their assembled state form an access opening (54) for a tool (56) via which the pin (48) can be pushed back, which allows the two connecting elements (38, 40) to be detached from each other.

13. A solar energy system for generating energy from solar radiation, with interconnected solar energy roof tiles (20) according to Claims 1 to 12, which are connected to a utilization system via a cold-water pipe (58) and a hot-water pipe (60) and via a main power line (92).

14. The solar energy system according to Claim 13, **characterized in that**
- solar energy roof tiles (20) in the edge portion of an area of solar energy roof tiles (20) according to the invention are each connected to a feeder line (64) via respective feeder access lines (66), which feeder lines are connected to the cold water line (58), and
- solar energy roof pans (20) in the opposite edge portion of said area are each connected to a manifold line (68) via respective manifold access lines (70), which manifold lines are connected to the hot water line (60).

15. The solar system according to Claim 13 or Claim 14, **characterized in that** the cold water line (58), the hot water line (60) and the main power line (92) are arranged in a downpipe (72) in sections.

## Revendications

1. Tuile à énergie solaire (20), destinée à récupérer de l'énergie électrique et thermique à partir du rayonnement solaire, dont la forme correspond sensiblement à la forme d'une tuile traditionnelle, pourvue d'une tuile de base (22), qui sert à la fixation de la tuile à énergie solaire (20) sur un toit et comportant par ailleurs
- un module photovoltaïque (90) placé sur la face supérieure, qui est connecté sur une première ligne électrique (96) et sur une deuxième ligne électrique (98), et
- un absorbeur (26) irrigué par un milieu, pourvu d'un conduit d'arrivée (34) et d'un conduit d'évacuation (36),
- le conduit d'arrivée (34) comportant sur son extrémité libre un premier élément connecteur (38),
- le conduit d'évacuation (36) comportant sur son extrémité libre un deuxième élément connecteur (40),
**caractérisée en ce**
- **qu'**au moins l'un des conduits d'arrivée et d'évacuation (34, 36) est conçu à longueur variable,
- dans un état de base, les deux éléments connecteurs (38, 40) sont placés dans des dimensions extérieures de la tuile à énergie solaire (20),
- dans un état de montage, au moins l'un des deux éléments connecteurs (38, 40) est susceptible d'être tiré au-delà des dimensions extérieures de la tuile à énergie solaire (20) et est susceptible d'être connecté de manière à conduire le milieu et l'électricité sur un élément connecteur (38, 40) correspondant d'une tuile à énergie solaire (20) voisine,
- le conduit (34, 36) à longueur variable renferme l'une des deux lignes électriques (96, 98).

2. Tuile à énergie solaire (20) selon la revendication 1, **caractérisée en ce que** la première ligne électrique (96) s'écoule le long du conduit d'évacuation (38).

3. Tuile à énergie solaire (20) selon la revendication 1 ou la revendication 2, **caractérisée en ce que** la première ligne électrique (96) est intégrée dans le conduit d'évacuation (38).

4. Tuile à énergie solaire (20) selon la revendication 2 ou la revendication 3, **caractérisée en ce que** les deux éléments connecteurs (38, 40) comportent chacun une surface de contact électrique, dont chacune est connectée de manière à conduire l'électricité par l'intermédiaire d'une ligne électrique (96, 98) associée avec le module photovoltaïque (90), lorsque les deux éléments connecteurs (38, 40) sont assemblés, les surfaces de contact se contactant et provoquant la connexion électrique.

5. Tuile à énergie solaire (20) selon l'une quelconque des revendications 1 à 4, **caractérisée en ce que** le conduit d'évacuation (34) est conçu à longueur variable et le premier élément connecteur (38) et le conduit d'arrivée (34) sont placés de manière stationnaire à l'intérieur de la tuile à énergie solaire (20).

6. Tuile à énergie solaire (20) selon l'une quelconque des revendications 1 à 5, **caractérisée en ce que** les deux éléments connecteurs (38, 40) sont conçus de sorte à créer une connexion par enclenchement.

7. Tuile à énergie solaire (20) selon l'une quelconque des revendications 1 à 6, **caractérisée en ce que** le premier élément connecteur (38) comporte un orifice de logement (46) ouvert vers le haut, en forme de T dans le plan horizontal, destiné à recevoir le deuxième élément connecteur (40), également conçu en forme de T.

8. Tuile à énergie solaire (20) selon la revendication 7, **caractérisée en ce que** le deuxième élément connecteur (40) comporte au moins un logement (52) dans lequel un élément d'enclenchement placé dans le premier élément connecteur (38) est enclenchable.

9. Tuile à énergie solaire (20) selon la revendication 8, **caractérisée en ce que** l'élément d'enclenchement est conçu sous la forme d'un goujon (48) contraint par ressort, le logement (52) et le goujon (48) étant sensiblement orientés en direction horizontale.

10. Tuile à énergie solaire (20) selon la revendication 9, **caractérisée en ce que** le logement (52) et l'élément d'enclenchement sont constitués au moins par endroits d'une matière conductrice d'électricité et forment les surfaces de contact conductrices d'électricité.

11. Tuile à énergie solaire (20) selon la revendication 10, **caractérisée en ce que** l'extrémité libre du goujon (48) est conçue en se terminant en cône, de telle sorte qu'il contacte une arête délimitant le logement (52).

12. Tuile à énergie solaire (20) selon l'une quelconque des revendications 9 à 11, **caractérisée en ce que** lorsque les deux éléments connecteurs (38, 40) sont assemblés, les deux éléments connecteurs (38, 40) forment un orifice d'accès (54) pour un outil (56), par l'intermédiaire duquel le goujon (48) peut être repoussé vers l'arrière, ce qui permet une désolidarisation des deux éléments connecteurs (38, 40) l'un de l'autre.

13. Système solaire, destiné à récupérer de l'énergie à partir du rayonnement solaire, comportant des tuiles à énergie solaire (20) selon les revendications 1 à 12, connectées les unes aux autres, qui par l'intermédiaire d'un conduit d'eau froide (58) et d'un conduit d'eau chaude (60) et par l'intermédiaire d'une ligne électrique principale (92) sont reliées à un système d'exploitation.

14. Système solaire selon la revendication 13, **caractérisé en ce que**
- dans la zone marginale d'une surface de tuiles à énergie solaire (20) selon l'invention, des tuiles à énergie solaire (20) sont reliées chacune par l'intermédiaire d'un conduit d'alimentation de masselotte (66) sur un conduit de masselotte (64) qui est connecté sur le conduit d'eau froide (58),
- dans la zone en vis-à-vis de la surface, des tuiles à énergie solaire (20) sont reliées chacune par l'intermédiaire d'un conduit d'alimentation collecteur (70) avec un conduit collecteur (68) qui est connecté sur le conduit d'eau chaude (60).

15. Système solaire selon la revendication 13 ou la revendication 14, **caractérisé en ce que** le conduit d'eau froide (58), le conduit d'eau chaude (60) et la ligne électrique principale (92) sont placés par tronçons dans un tuyau de chute (72).
